# FASCICULE DE BREVET EUROPEEN

(11) **EP 3 684 565 B1**
(45) Date de publication et mention de la délivrance du brevet: **06.09.2023**
(21) Numéro de dépôt: 18788810.2
(22) Date de dépôt: 21.09.2018
(51) Int. Cl.: B26D 1/46, B26D 1/48, B23D 57/00, B23D 61/18, B26D 7/06, B26D 5/00, B26D 7/01

(54) **PROCEDE ET DISPOSITIF DE DECOUPE D'UN MATELAS OU D'UN PANNEAU EN LAINE MINERALE OU D'UNE PLAQUE OU D'UN PANNEAU EN MATERIAU DE CONSTRUCTION POREUX**
VERFAHREN UND VORRICHTUNG ZUM SCHNEIDEN VON EINER MATRATZE ODER EINER AUS MINERALLWOLLE ODER AUS PORÖSEM BAUMATERIAL BESTEHENDEN PLATTE
METHOD AND DEVICE FOR CUTTING A MATRESS OR A PANEL OF MINERAL WOOD OR A PLATE FROM A PANEL IN POROUS CONSTRUCTIONAL MATERIAL

(30) Priorité: 21.09.2017 FR 1758729
(43) Date de publication de la demande: 29.07.2020
(73) Titulaire: SAINT-GOBAIN PLACO, 92400 Courbevoie (FR)
(72) Inventeur: DOUCHE, Jean-Pierre, 60150 Le Plessis Brion (FR)
(74) Mandataire: Saint-Gobain Recherche
(86) Numéro de dépôt international: PCT/FR2018/052307
(87) Numéro de publication internationale: WO 2019/058066

(56) Documents cités:
- WO-A1-2008/138064
- JP-A- S 642 897
- KR-A- 20040 101 856
- NL-A- 7 015 354
- US-A1- 2015 266 117

## Description

L'invention concerne en premier lieu un dispositif et un procédé de découpe d'un matelas ou d'un panneau en laine minérale. Elle s'applique tout particulièrement aux produits d'isolation acoustique à base de laine minérale.

Les matelas ou panneaux en laine minérale sont constitués de fibres minérales fabriquées par fibrage par centrifugation interne ou externe à partir de matière minérale fondue. Du liant est pulvérisé sur les fibres minérales avant qu'elles n'atterrissent sur un tapis de réception. Les matelas ou panneaux sont obtenus après passage en étuve pour faire polymériser le liant. Il existe aussi des produits sans liant consolidés par un procédé mécanique dit d'aiguilletage. Les matelas ou panneaux peuvent être en laine de verre, en laine de roche ou encore en laine de laitier.

Les matelas ou panneaux en laine minérale obtenus après fibrage par centrifugation nécessitent parfois d'être découpés dans leur longueur ou leur largeur afin de diminuer leur taille, dans leur épaisseur afin de réaliser un matelas plus fin et/ou sur leurs bords afin de former des feuillures ou tout autre forme de détail de bord. Il est connu de réaliser ces différentes découpes avec une scie à ruban, une scie circulaire et/ou une toupie de découpe. Toutefois, ces dispositifs de découpe réalisent des découpes de qualité sommaire qui peuvent nécessiter une opération de reprise après découpe, par exemple masquage par peinture, ou ponçage. Ces dispositifs de découpe ont également comme inconvénient de générer beaucoup de poussière, ce qui est potentiellement dangereux pour les opérateurs. Enfin, les dispositifs de découpe à scie ont généralement des dents de scie décalées dans l'épaisseur de part et d'autre de la lame de scie, ce qui peut générer une coupe plus large que nécessaire, source de déchets importants pouvant atteindre 10% en masse du matelas de départ, et gâcher de la matière.

Ce problème se pose plus particulièrement lorsque le produit en laine minérale se compose de laine de roche, a fortiori de densité relativement élevée (typiquement supérieure à 25 kg/m³), en raison de la proportion importante de grains dits « infibrés » qui occasionnent au passage de la lame de scie un arrachage de matière : non seulement le grain de matière minérale, mais aussi un paquet de fibres qui sont attachées à ce grain par l'intermédiaire du liant polymérisé.

L'invention concerne en second lieu un dispositif et un procédé de découpe d'une plaque ou d'un panneau en matériau de construction poreux. Cette plaque ou ce panneau peut être en tous matériaux de construction poreux, par exemple à base de fibres minérales (par exemple laine minérale de verre ou de roche, de fibres céramiques ou de fibres de verre textiles), végétales et/ou synthétiques (par exemple polymères)
Ces matériaux de construction poreux peuvent être produits par des procédés en ligne où l'on prépare un mélange par voie sèche ou liquide, notamment en suspension aérienne de fibres, ce mélange renfermant un agent liant, et le mélange est déposé ou réparti sur un organe convoyeur et soumis aux opérations de prise ou durcissement de l'agent liant. Finalement un matériau solide est obtenu qui est découpé aux dimensions désirées pour façonner un produit final, le cas échéant avant des étapes de transformation ultérieures. D'autres matériaux de construction poreux peuvent être produits par des procédés sans liant, notamment grâce à des moyens mécaniques tels que l'aiguilletage où la cohésion du produit est assuré par l'enchevêtrement des fibres entre elles. Une première découpe est effectuée en ligne pour séparer des éléments individuels, et une ou plusieurs opérations de découpe peuvent être réalisées en reprise dans des ateliers de façonnage.

Il existe, dans les procédés en ligne, des dispositifs de découpe tels que des scies à guillotine, des scies à ruban, des scies circulaires, ou encore des fraises ou des toupies de découpe. Toutefois, ces dispositifs de découpe ont également comme inconvénient de générer beaucoup de poussière, ce qui est potentiellement dangereux pour les opérateurs. De plus, ces dispositifs de découpes ont généralement des dents de scie décalées dans l'épaisseur, ce qui peut générer des déchets importants pouvant atteindre 10% en masse de la plaque de départ, et gâcher de la matière.

Il existe aussi des dispositifs à jets d'eau à haute pression, qui peuvent certes limiter les poussières mais ont l'inconvénient d'apporter une quantité d'eau importante sur les surfaces de découpe, qui peut être absorbée par le matériau poreux et pénaliser les propriétés y compris mécaniques du matériau au détriment de la qualité de la construction finale.

Les demandes de brevet FR1652199 et FR1652198 décrivent un dispositif et un procédé pour découper respectivement un matelas ou panneau en laine minérale ou une plaque ou un panneau en matériau de construction poreux grâce à un fil diamanté qui, dans un mode de réalisation, est tendu entre deux bobines sur lesquelles il est enroulé, chacune de ses extrémités étant fixé sur une des bobines. Ce dispositif a comme inconvénient de devoir enrouler/dérouler le fil dans un sens puis dans l'autre, ce qui entraîne une usure prématurée du fil par frottement sur lui-même lors de l'enroulement. De plus, les deux bobines étant asservies, ce dispositif est compliqué à mettre en oeuvre pour assurer une tension constante du fil. Enfin, le fil ayant une longueur donnée, le procédé de découpe est discontinu du fait des arrêts pour inverser le sens de rotation des moteurs lorsqu'une bobine est vide, ce qui retarde la production.

Le document WO2008/138064 décrit une machine à deux chemins de découpe comprenant un cadre support définissant une ouverture, un premier élément de découpe sans fin traversant un premier chemin de découpe dans une première direction et un deuxième élément de découpe sans fin traversant un deuxième chemin de découpe dans une deuxième direction, les premier et deuxième chemins pouvant bouger pour s'étendre au moins partiellement dans l'ouverture, et la première direction n'étant pas parallèle à la deuxième direction.

Il y a donc un besoin pour un dispositif de découpe de matelas ou panneau en laine minérale ou de plaque ou panneau en matériau de construction poreux, qui permette de réaliser une découpe nette sans ponçage ultérieur et à sec, qui limite fortement les déchets et la poussière générés, et qui, en outre, ait une durée de vie augmentée et permette d'avoir une production en continu.

Pour cela, l'invention propose un dispositif de découpe d'un matelas ou panneau en laine minérale ou d'une plaque ou d'un panneau en matériau de construction poreux selon la revendication 1.

Selon une autre caractéristique, le fil formant une boucle sans fin munie de grains abrasifs est un fil en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm.

Selon une autre caractéristique, le câble formant une boucle sans fin munie de grains abrasifs est un câble multibrin torsadé en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm.

Selon une autre caractéristique, la bande formant une boucle sans fin munie de grains abrasifs est une bande en acier de largeur comprise entre 34 et 42 mm, de préférence entre 36 et 40 mm, et d'épaisseur comprise entre 0,4 et 0,8 mm, de préférence entre 0,5 et 0,7 mm, comprenant des grains abrasifs, notamment de diamant ou de nitrure de bore cubique, de diamètre moyen compris entre 160 et 200 µm, de préférence entre 170 et 190 µm, soudés sur un bord de la bande de largeur comprise entre 2 et 5 mm.

Selon une autre caractéristique, l'élément formant une boucle sans fin munie de grains abrasifs est mis en tension autour de deux poulies, l'espace entre les deux poulies étant supérieur à au moins une dimension du matelas ou panneau en laine minérale ou du panneau ou de la plaque en matériau de construction poreux à découper, une des poulies étant libre en rotation tandis que l'autre est apte à être entraînée en rotation par un moteur, et chaque poulie comportant de préférence sur son pourtour un revêtement sur lequel repose l'élément formant une boucle sans fin munie de grains abrasifs.

Selon une autre caractéristique, la vitesse linéaire de défilement de l'élément formant une boucle sans fin munie de grains abrasifs est comprise entre 10 m/s et 30 m/s, de préférence entre 10 et 20 m/s, voire entre 10 et 15 m/s.

Selon une autre caractéristique, la tension du fil formant une boucle sans fin munie de grains abrasifs ou du câble formant une boucle sans fin munie de grains abrasifs est comprise entre 150 N et 500 N, de préférence entre 200 et 300 N ou la tension de la bande formant une boucle sans fin munie de grains abrasifs est comprise entre 1500 N et 5000 N, de préférence entre 2000 et 4500 N, voire entre 2000 et 3000 N.

Selon l'invention, le dispositif de découpe comprend des moyens de préhension du matelas ou panneau en laine minérale ou de la plaque ou du panneau en matériau de construction poreux, les moyens de préhensions comprenant un système de préhension sous vide adapté à se déplacer simultanément et dans la même direction X que les moyens de déplacement du matelas ou panneau en laine minérale ou de la plaque ou du panneau en matériau de construction poreux.

Selon une autre caractéristique, le dispositif de découpe comprend en outre des moyens de déplacement de l'élément formant une boucle sans fin munie de grains abrasifs, l'élément formant une boucle sans fin munie de grains abrasifs étant apte à se déplacer dans une direction Z perpendiculaire à la fois à la direction X de déplacement du matelas ou panneau en laine minérale ou de la plaque ou du panneau en matériau de construction poreux et à la direction Y de défilement de l'élément formant une boucle sans fin munie de grains abrasifs, la vitesse de déplacement de l'élément formant une boucle sans fin munie de grains abrasifs étant de préférence comprise entre 10 mm/s et 250 mm/s, encore plus préférentiellement entre 25 mm/s et 200 mm/s pour une découpe sur les bords.

Selon une autre caractéristique, la vitesse de déplacement du matelas ou panneau en laine minérale ou de la plaque ou du panneau en matériau de construction poreux est comprise entre 200 mm/s et 1000 mm/s, de préférence entre 300 mm/s et 700 mm/s pour une découpe dans l'épaisseur et entre 10 mm/s et 250 mm/s, de préférence entre 25 mm/s et 200 mm/s pour une découpe sur les bords.

Selon une autre caractéristique, le dispositif de découpe comprend en outre au moins un capteur d'effort disposé contre l'élément formant une boucle sans fin munie de grains abrasifs, ainsi qu'un moyen d'ajustement en temps réel de l'effort de coupe afin de le maintenir entre 10 et 30N.

Selon une autre caractéristique, les grains abrasifs de l'élément formant une boucle sans fin munie de grains abrasifs sont en diamant ou en nitrure de bore cubique.

L'invention concerne également un procédé de découpe d'un matelas ou panneau en laine minérale ou d'une plaque ou d'un panneau en matériau de construction poreux selon la revendication 10.

Selon une autre caractéristique, la découpe est réalisée par :
- un fil formant une boucle sans fin munie de grains abrasifs constitué d'un fil en acier de diamètre compris entre 0,80 et 1,30 mm, de préférence entre 0,95 et 1,15 mm, à la surface duquel sont soudés des grains abrasifs, notamment d'oxyde de zirconium, de diamètre moyen compris entre 160 et 200 µm, de préférence entre 170 et 190 µm, ou
- un câble formant une boucle sans fin munie de grains abrasifs constitué d'un câble multibrin torsadé en acier de diamètre compris entre 0,80 et 1,30 mm, de préférence entre 0,95 et 1,15 mm, à la surface duquel sont soudés des grains abrasifs, notamment d'oxyde de zirconium, de diamètre moyen compris entre 160 et 200 µm, de préférence entre 170 et 190 µm, ou
- une bande formant une boucle sans fin munie de grains abrasifs constituée d'une bande en acier de largeur comprise entre 34 et 42 mm, de préférence entre 36 et 40 mm, et d'épaisseur comprise entre 0,4 et 0,8 mm, de préférence entre 0,5 et 0,7 mm, comprenant des grains abrasifs, notamment d'oxyde de zirconium, de diamètre moyen compris entre 160 et 200 µm, de préférence entre 170 et 190 µm, soudés sur un bord de la bande, de largeur comprise entre 2 et 5 mm.

Selon une autre caractéristique, l'élément formant une boucle sans fin munie de grains abrasifs, mis en tension autour de deux poulies, est entraîné en défilement par la rotation d'une des poulies elle-même entraînée en rotation par un moteur, l'autre poulie étant libre en rotation, l'espace entre les deux poulies étant supérieur à au moins une dimension du matelas ou panneau en laine minérale ou de la plaque ou du panneau en matériau de construction poreux à découper, et chaque poulie comportant de préférence sur son pourtour un revêtement sur lequel repose l'élément formant une boucle sans fin munie de grains abrasifs.

Selon une autre caractéristique, l'élément formant une boucle sans fin munie de grains abrasifs défile à une vitesse linéaire comprise entre 10 m/s et 30 m/s, de préférence entre 10 et 20 m/s, voire entre 10 et 15 m/s.

Selon une autre caractéristique, la tension du fil formant une boucle sans fin munie de grains abrasifs ou du câble formant une boucle sans fin munie de grains abrasifs est comprise entre 150 N et 500 N, de préférence entre 200 et 300 N ou la tension de la bande formant une boucle sans fin munie de grains abrasifs est comprise entre 1500 N et 5000 N, de préférence entre 2000 et 4500 N, voire entre 2000 et 3000 N.

Selon une autre caractéristique, le matelas ou panneau en laine minérale ou la plaque ou le panneau en matériau de construction poreux se déplace à une vitesse comprise entre 200 mm/s et 1000 mm/s, de préférence entre 300 mm/s et 700 mm/s pour une découpe dans l'épaisseur et entre 10 mm/s et 250 mm/s, de préférence entre 25 mm/s et 200 mm/s pour une découpe sur les bords.

Selon l'invention, le procédé de découpe comprend une étape de préhension du matelas ou panneau en laine minérale ou du panneau ou de la plaque en matériau de construction poreux, les moyens de préhensions comprenant un système de préhension sous vide adapté à se déplacer simultanément et dans la même direction X que les moyens de déplacement du matelas ou panneau en laine minérale ou du panneau ou de la plaque en matériau de construction poreux.

Selon une autre caractéristique, pendant l'étape de découpe du matelas ou de la plaque, l'élément formant une boucle sans fin munie de grains abrasifs est apte à se déplacer selon une direction Z perpendiculaire à la fois à la direction X de déplacement du matelas ou panneau en laine minérale ou de la plaque ou du panneau en matériau de construction poreux, et à la direction Y de défilement de l'élément formant une boucle sans fin munie de grains abrasifs, de façon à réaliser une découpe selon deux directions perpendiculaires l'une à l'autre, l'élément formant une boucle sans fin munie de grains abrasifs se déplaçant de préférence à une vitesse comprise entre 10 mm/s et 250 mm/s, encore plus préférentiellement entre 25 mm/s et 200 mm/s pour une découpe sur les bords.

Selon une autre caractéristique, l'effort de coupe, mesuré par au moins un capteur d'effort disposé contre l'élément formant une boucle sans fin munie de grains abrasifs, est maintenu entre 10 et 30N par un moyen d'ajustement en temps réel.

Selon une autre caractéristique, les grains abrasifs de l'élément formant une boucle sans fin munie de grains abrasifs sont en diamant ou en nitrure de bore cubique.

D'autres caractéristiques et avantages de l'invention vont à présent être décrits en regard des dessins sur lesquels :
- La figure 1 représente une vue de face d'un dispositif de découpe selon l'invention ;
- Les figures 2 et 3 représentent une vue en coupe de la poulie supérieure du dispositif de découpe de la figure 1, respectivement pour un fil et un câble sans fin diamantés et pour une bande sans fin diamantée.
- La figure 4 représente une vue en coupe d'un exemple de découpe dans un matelas, panneau ou plaque, réalisée avec le dispositif selon l'invention ;
- La figure 5 représente différents types de bords de matelas, panneau ou plaque.

Les numéros de référence qui sont identiques sur les différentes figures représentent des éléments similaires ou identiques.

L'invention se rapporte à un dispositif de découpe d'un matelas ou panneau en laine minérale ou d'une plaque ou d'un panneau en matériau de construction poreux, comprenant des moyens de déplacement du matelas ou panneau en laine minérale ou de la plaque ou du panneau en matériau de construction poreux, qui comprennent au moins un convoyeur, aptes à se déplacer suivant une direction X, un élément formant une boucle sans fin munie de grains abrasifs, dit élément sans fin diamanté, adapté à découper le matelas ou panneau en laine minérale ou la plaque ou le panneau en matériau de construction poreux, et des moyens de défilement de l'élément élément formant une boucle sans fin munie de grains abrasifs dans une direction Y perpendiculaire à la direction X de déplacement du matelas ou panneau en laine minérale ou de la plaque ou du panneau en matériau de construction poreux.

L'élément élément formant une boucle sans fin munie de grains abrasifs , de préférence un fil formant une boucle sans fin munie de grains abrasifs , un câble formant une boucle sans fin munie de grains abrasifs ou une bande formant une boucle sans fin munie de grains abrasifs , permet une découpe d'excellente qualité, avec un état de surface net, sans avoir à réaliser de ponçage ultérieur ; cela permet de limiter au maximum les pertes de matière et les déchets générés car l'élément diamanté est beaucoup plus fin que les scies des dispositifs de découpe connus. De plus, la découpe par fil formant une boucle sans fin munie de grains abrasifs , câble formant une boucle sans fin munie de grains abrasifs ou bande formant une boucle sans fin munie de grains abrasifs ne génère quasiment pas de poussière, ce qui permet d'améliorer les conditions de travail des opérateurs.

En outre, le fait que l'élément forme une boucle sans fin permet d'avoir une production en continu puisqu'on s'affranchit des inversions de sens de rotation de moteur. De plus, l'élément formant une boucle sans fin munie de grains abrasifs n'est plus enroulé sur lui-même, ce qui évite une usure prématurée de ce dernier.

De manière surprenante, l'utilisation d'un élément de découpe dans les conditions de l'invention permet une coupe extrêmement propre. En particulier, dans le cas d'un produit en laine de roche renfermant des grains de matière infibrée, il a été observé que les résidus particulaires de découpe sont considérablement réduits en nombre et en masse, et qu'ils contiennent beaucoup moins de grains qu'avec une découpe classique, les grains restant majoritairement inclus dans le produit minéral. On fait ici l'hypothèse que l'élément de découpe se crée un chemin entre les fibres, respectivement entre les fibres et les grains, et effectue une libération des fibres par écartement de l'enchevêtrement fibreux, plutôt qu'une cassure des fibres.

Un tel usage d'un élément formant une boucle sans fin munie de grains abrasifs n'était pas proposé dans l'état de la technique. Au contraire, l'utilisation d'un fil diamanté était jusqu'à présent destinée à la découpe de matériaux durs et cassants, requérant un système de refroidissement par jet d'un liant hydraulique. L'application d'un élément diamanté par les inventeurs à la découpe de matériaux fibreux, à sec, sans jet d'eau de refroidissement, a donné lieu à un nouvel usage, donnant accès à des produits fibreux de qualité largement supérieure aux attentes.

Ceci peut être obtenu grâce au choix d'un élément de découpe suffisamment fin par rapport aux défauts du produit fibreux, typiquement de diamètre inférieur à la taille des particules infibrées qui peuvent faire de 1 à plusieurs millimètres de diamètre.

Selon l'invention, on désigne par « élément sans fin diamanté » un élément formant une boucle sans fin munie de grains abrasifs. Il s'agit un élément de découpe généralement métallique porteur à sa surface de grains abrasifs ou de particules abrasives, tel(le)s que du diamant naturel ou synthétique, avantageusement à base d'oxyde de zirconium, ou du nitrure de bore cubique (CBN Cubic Boron Nitride en anglais). Les grains ou particules sont retenu(e)s à la surface de l'âme de l'élément par brasure ou par l'intermédiaire d'un dépôt continu ou plaquage métallique. Les grains abrasifs ou particules abrasives, aux arêtes vives et très dures, ont un pouvoir de coupe maximal et sans échauffement.

Plus précisément, on entend par « élément diamanté » un élément muni de grains abrasifs en diamant naturel ou synthétique, avantageusement à base d'oxyde de zirconium, ou en nitrure de bore cubique (CBN Cubic Boron Nitride en anglais).

Et on entend par « élément sans fin » un élément dont les deux extrémités sont attachées l'une à l'autre pour former un élément continu sans fin formant une boucle fermée.

On entend par « matelas, plaque ou panneau », soit une bande continue, qui correspond généralement à un matelas en sortie d'étuve, soit un matelas ou panneau, de forme sensiblement parallélépipédique, qui résulte généralement de la découpe en ligne après étuve, et qui peut même avoir été redécoupé hors ligne ultérieurement. Les termes « matelas ou panneau » incluent des matelas ou panneaux adaptés à être roulés pour leur commercialisation.

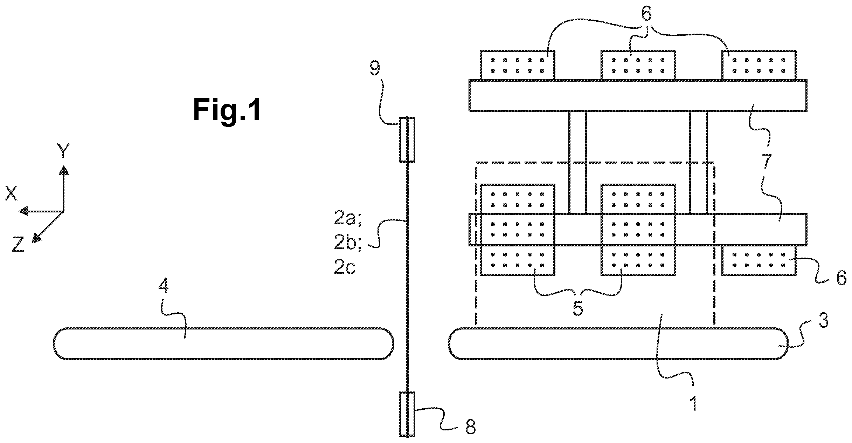

La figure 1 représente une vue de face du dispositif de découpe selon l'invention.

Le matelas ou panneau 1 en laine minérale, destiné à être découpé sur le dispositif selon l'invention, a par exemple une densité supérieure à 25 kg/m³, de préférence comprise entre 30 kg/m³ et 180 kg/m³ afin de faciliter la découpe. Le matelas ou panneau en laine minérale peut par exemple être revêtu d'un voile sur chacune de ses faces principales. Un tel voile peut procurer au matelas des propriétés mécaniques et acoustiques.

La plaque ou le panneau 1 de matériau de construction poreux, destiné à être découpé sur le dispositif selon l'invention, a par exemple une densité supérieure ou égale à 5 kg/m³, en particulier au moins 10 kg/m³, notamment au moins 20 à 25 kg/m³ et de préférence inférieure à 180 kg/m³.

Dans la suite de la description, afin de simplifier, nous nommerons « panneau 1 » le matelas ou panneau 1 en laine minérale ou la plaque ou le panneau 1 en matériau de construction poreux, sans que cela ne soit à comprendre comme une limitation.

Le dispositif de découpe selon l'invention comprend des moyens de déplacement d'un matelas 1 dans une direction X, ainsi qu'un élément 2a, 2b, 2c formant une boucle sans fin munie de grains abrasifs, adapté à découper le matelas 1. L'élément 2a, 2b, 2c formant une boucle sans fin munie de grains abrasifs est appelé, dans la suite de la description, pour des raisons de simplification mais sans que cela ne soit compris comme étant limitatif, élément sans fin diamanté 2a, 2b, 2c.

Le dispositif de découpe selon l'invention comprend également des moyens 8, 9 de défilement de l'élément sans fin diamanté 2a, 2b, 2c dans une direction Y perpendiculaire à la direction X de déplacement du matelas 1.

Selon les modes de réalisation, l'élément sans fin diamanté 2a, 2b, 2c peut en outre être fixe par rapport à la direction Z ou apte à se déplacer selon cette direction Z, la direction Z étant perpendiculaire à la fois à la direction X de déplacement du matelas 1 et à la direction Y de défilement de l'élément sans fin diamanté 2a, 2b, 2c. Ainsi, le dispositif permet de réaliser des découpes selon deux directions perpendiculaires l'une à l'autre. De la sorte, plusieurs découpes différentes peuvent être réalisées en une seule passe. De plus, en combinant les deux mouvements de déplacement dans les directions X et Z, on peut réaliser des découpes de formes variées. L'élément sans fin diamanté 2a, 2b, 2c peut ainsi permettre respectivement une découpe du matelas 1 en deux dans l'épaisseur. Lorsque l'élément diamanté est en plus apte à se déplacer selon la direction Z, celui-ci permet en outre une découpe transversale et sur les bords. L'ensemble des découpes peut être réalisé en ligne.

Lorsque le matelas ou panneau 1 repose verticalement sur le convoyeur 3, 4 horizontal, comme illustré sur la figure 1, l'axe Z est horizontal et l'axe Y est vertical.

Lorsque le matelas 1 est sous forme d'une bande continue horizontale, l'axe Z est vertical et l'axe Y est horizontal.

Les moyens de déplacement du matelas 1 comprennent au moins un convoyeur 3, 4. Le convoyeur 3, 4 est un convoyeur à bande horizontal sur lequel repose le matelas 1. Le convoyeur peut avancer ou reculer en fonction des besoins de la découpe. La direction de déplacement est l'axe X sur la figure 1. Le matelas 1 peut reposer horizontalement, posé à plat, ou verticalement, posé sur sa tranche, sur le convoyeur 3, 4.

Le convoyeur 3, 4 est de préférence en deux parties lorsque l'élément sans fin diamanté 2a, 2b, 2c est apte à se déplacer dans la direction Z. Ainsi, un espace est prévu entre les deux parties de convoyeur 3, 4 pour permettre le passage de l'élément sans fin diamanté 2a, 2b, 2c pour la découpe transversale du matelas 1, sans être gêné par le convoyeur.

Par ailleurs, le dispositif comprend des moyens de préhension 5, 6, 7 du matelas 1 afin de maintenir le matelas en position. Dans ce cas-là, les moyens de préhension 5, 6, 7 du matelas 1 sont aptes à se déplacer simultanément et dans la même direction X que le convoyeur 3, 4 pour un mouvement uniforme du matelas 1.

Les moyens de préhension du matelas 1 comprennent un système de préhension sous vide 5, 6, 7. Le système de préhension sous vide 5, 6, 7 est constitué de préhenseurs 5, 6 sous vide fixés sur un support mobile 7 adapté à se déplacer en même temps que le ou les convoyeurs 3, 4 pendant la découpe du matelas 1. Les préhenseurs sous vide 5, 6 peuvent être sous forme de plaques percées d'une multitude d'orifices reliés à un moyen de dépressurisation ; le nombre et le diamètre des orifices sont choisis en fonction de la force que l'on souhaite appliquer localement sur le matelas 1. Les préhenseurs 5,6 peuvent avoir différentes tailles, comme représenté sur la figure 1. Le matelas 1 doit être parfaitement tenu par les préhenseurs sous vide 5, 6 pendant la découpe par l'élément sans fin diamanté 2a, 2b, 2c pour permettre une découpe la plus précise possible. Les préhenseurs de taille plus importante 5 permettent un meilleur maintien des matelas de petite taille. Les préhenseurs sous vide 5, 6 doivent permettre de maintenir le matelas 1 sans le contraindre, sans le déformer. Ces préhenseurs sous vide reprennent les efforts exercés par l'élément sans fin diamanté lors du déplacement du matelas 1 et/ou de l'élément sans fin diamanté 2a, 2b, 2c pour assurer une maîtrise parfaite du positionnement dynamique du matelas, et en évitant tout glissement du matelas par rapport au préhenseur. La synchronisation des différents mouvements est assurée par un système numérique de commande. Sur la figure 1, seuls les préhenseurs sous vide 5 maintiennent le matelas 1 car dans cet exemple de réalisation le matelas est de taille réduite. Les préhenseurs sous vide 6, périphériques, sont utilisés en complément des préhenseurs sous vide 5 pour des matelas 1 de taille plus grande.

L'élément sans fin diamanté est de préférence un fil 2a formant une boucle sans fin munie de grains abrasifs, dit fil sans fin diamanté 2a, un câble 2b formant une boucle sans fin munie de grains abrasifs, dit câble sans fin diamanté 2b ou une bande 2c formant une boucle sans fin munie de grains abrasifs, dite bande sans fin diamantée 2c. Le fil sans fin diamanté 2a et le câble sans fin diamanté 2b sont particulièrement adaptés pour réaliser des découpes de bords, en particulier de reliefs de bords, mais permettent également de réaliser des découpes dans l'épaisseur. La bande sans fin diamantée 2c est particulièrement adaptée pour réaliser des découpes dans l'épaisseur, mais permet également de réaliser des découpes de bords.

Le fil sans fin diamanté 2a est un fil en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm.

Le câble sans fin diamanté 2b est un câble multibrin torsadé en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm. Le fait que le câble soit multibrin permet de découpler les efforts à la fatigue par rapport au fil 2a, ce qui permet une meilleure résistance mécanique.

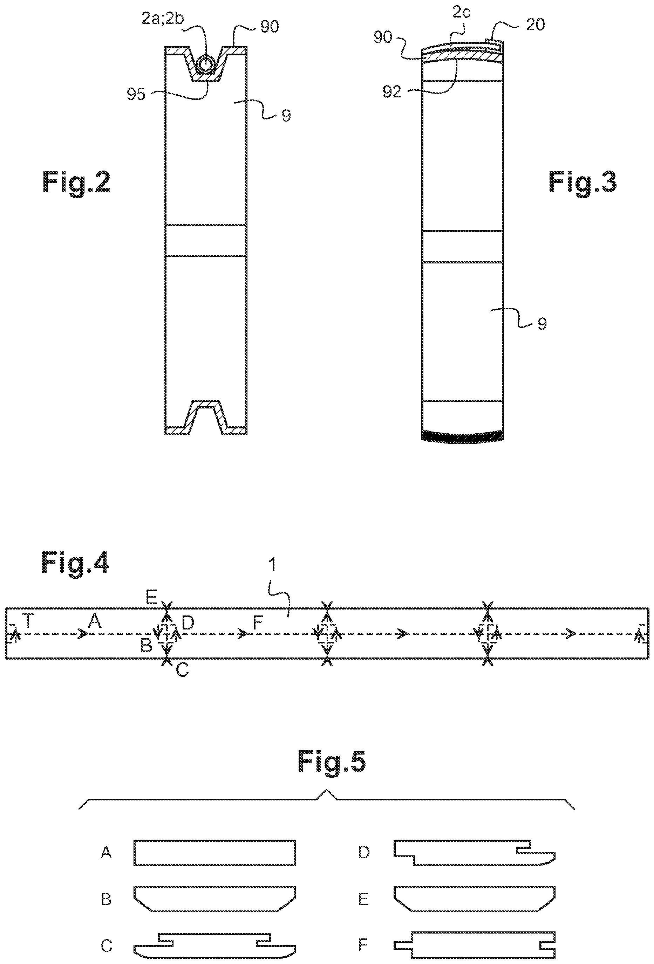

La bande sans fin diamantée 2c est une bande en acier de largeur comprise entre 34 et 42 mm, de préférence entre 36 et 40 mm, et d'épaisseur comprise entre 0,4 et 0,8 mm, de préférence entre 0,5 et 0,7 mm, à la surface de laquelle sont soudés des grains abrasifs, notamment de diamant ou de nitrure de bore cubique, de diamètre moyen compris entre 160 et 200 µm, de préférence entre 170 et 190 µm. Les grains abrasifs ne sont de préférence présents que sur un bord 20 de la bande 2c, comme cela est visible sur la figure 3. La largeur de ce bord 20 est comprise entre 2 et 5 mm. Cela permet de diminuer les coûts de fabrication. La découpe du matelas 1 est réalisée par le bord 20 muni des grains abrasifs.

La taille des grains de l'élément sans fin diamanté 2a, 2b, 2c permet une découpe aisée sans que les efforts de coupe soient trop importants. L'électrolyte de soudure est de préférence à base Nickel. Les grains pénètrent suffisamment dans l'électrolyte pour qu'ils ne se déchaussent pas sous l'effet des efforts de coupe.

La densité de grains abrasifs ne doit pas être trop forte pour éviter les risques d'encrassement. Elle doit être adaptée au type de matériau à découper, en particulier elle peut être plus faible pour découper des fibres de bois que des fibres minérales.

L'élément sans fin diamanté 2a, 2b, 2c est disposé autour de deux poulies 8, 9, l'espace entre les deux poulies 8, 9 étant supérieur à au moins une dimension du matelas 1 à découper.

L'élément sans fin diamanté 2a, 2b, 2c est de préférence vertical (selon l'axe Y), comme représenté sur la figure 1. Seule une des poulies, de préférence la poulie supérieure 9, est entraînée en rotation par un moteur (non représenté). L'autre poulie 8 est libre en rotation. L'élément sans fin diamanté 2a, 2b, 2c est mis en tension grâce au réglage du positionnement vertical d'une des poulies, de préférence de la poulie supérieure 9, qui est reliée à un moteur.

Le réglage de la tension de l'élément sans fin diamanté 2a, 2b, 2c est très important car la tension est un élément déterminant pour réussir à obtenir une découpe nette du matelas 1. La tension de l'élément sans fin diamanté 2a, 2b, 2c est réglée en ajustant le positionnement vertical de la poulie 9. Cet ajustement est réalisé en temps réel grâce à un système pneumatique relié à un capteur de tension de l'élément sans fin diamanté 2a, 2b, 2c de façon à conserver une tension constante pendant la découpe.

Les figures 2 et 3 représentent une vue en coupe de la poulie supérieure 9 du dispositif de découpe de la figure 1, respectivement pour un fil et un câble sans fin diamantés et pour une bande sans fin diamantée.

La poulie supérieure 9 comporte sur son pourtour un revêtement 90, par exemple en polyuréthane. Ce revêtement 90 permet d'éviter tout contact entre les grains abrasifs de l'élément sans fin diamanté 2a, 2b, 2c et le matériau de la poulie, qui est de préférence métallique, afin d'éviter une usure prématurée.

Le revêtement 90 a de plus un facteur d'adhérence élevé, qui permet d'éviter tout glissement entre l'élément sans fin diamanté 2a, 2b, 2c et la poulie 9 dès que ce dernier est mis en tension.

La poulie inférieure 8 comporte également un revêtement, par exemple en polyuréthane, sur son pourtour, pour les mêmes raisons.

Dans le mode de réalisation de la figure 2, les poulies inférieure 8 et supérieure 9 sont en outre munie d'une gorge 95 destinée à accueillir le fil sans fin diamanté 2a ou le câble sans fin diamanté 2b. Cette gorge permet également un guidage du fil ou du câble.

Le diamètre des poulies est d'au moins 400 mm pour limiter les efforts de fatigue de l'élément sans fin diamanté.

Dans le mode de réalisation de la figure 3, les poulies inférieure 8 et supérieure 9 sont en outre bombées sur leur pourtour destiné à accueillir la bande sans fin diamantée 2c. Ce bombage 92 permet un guidage de la bande.

La vitesse linéaire de défilement de l'élément sans fin diamanté 2a, 2b, 2c est comprise entre 10 m/s et 30 m/s, de préférence entre 10 m/s et 20 m/s, voire entre 10 et 15 m/s, pour améliorer encore la qualité de la découpe. L'élément sans fin diamanté 2a, 2b, 2c défile à sec, sans passage dans un liquide de refroidissement.

La tension du fil sans fin diamanté 2a ou du câble sans fin diamanté 2b est comprise entre 150 N et 500 N, de préférence entre 200 N et 300 N pour améliorer encore la qualité de la découpe en réduisant la flexion du fil. La tension du fil ou du câble sans fin diamanté 2a, 2b dépend du diamètre de ce dernier. En outre, plus le fil ou le câble sans fin diamanté 2a, 2b est tendu, plus sa flexion est réduite. Le fil sans fin diamanté 2a ou le câble sans fin diamanté 2b pouvant être soumis à des contraintes très importantes, il est de préférence en acier à très haute limite d'élasticité pouvant résister à des contraintes pouvant atteindre 700 MPa, voire 800 MPa.

La tension de la bande sans fin diamantée 2c est comprise entre 1500 N et 5000 N, de préférence entre 2000 et 4500 N, voire entre 2000 et 3000 N pour améliorer encore la qualité de la découpe en réduisant la flexion du fil. La tension de la bande sans fin diamantée 2c dépend du diamètre de cette dernière. En outre, plus la bande sans fin diamantée 2c est tendue, plus sa flexion est réduite. La bande sans fin diamantée 2c pouvant être soumise à des contraintes très importantes, elle est de préférence en acier à très haute limite d'élasticité pouvant résister à des contraintes pouvant atteindre 1250 MPa, voire 1600 MPa.

L'effort de coupe de l'élément sans fin diamanté 2a, 2b, 2c est un autre paramètre très important pour une découpe nette du matelas. L'effort de coupe dépend en particulier de la densité du matériau à découper, de la vitesse d'avance du matelas, de la vitesse de défilement de l'élément sans fin diamanté, ainsi que du profil de la découpe à réaliser. Aussi, le dispositif de découpe selon l'invention comprend au moins un capteur d'effort disposé contre l'élément sans fin diamanté 2a, 2b, 2c. L'effort de coupe est ainsi ajusté en temps réel (par exemple toutes les 5 ms) par réglage de la vitesse de rotation de la poulie supérieure 9, qui détermine la vitesse de défilement de l'élément sans fin diamanté 2a, 2b, 2c et par l'ajustement de la vitesse d'avance du matelas 1. L'effort de coupe est de préférence maintenu entre 10 et 30N.

Enfin, les poulies 8, 9 sur lesquelles est positionné l'élément sans fin diamanté 2a, 2b, 2c sont montées sur un châssis ou un montant (non représenté), lui-même associé à des moyens de déplacement (non représentés). Ces moyens de déplacement permettent un déplacement de l'élément sans fin diamanté 2a, 2b, 2c dans la direction Z de la figure 1, soit selon un axe perpendiculaire à la fois à la direction de déplacement du matelas 1, qui est selon l'axe X, et à la direction Y de défilement de l'élément sans fin diamanté 2a, 2b, 2c. Les deux mouvements de déplacement selon les axes X et Z peuvent être combinés pour réaliser des découpes de forme complexe. La vitesse de déplacement de l'élément sans fin diamanté 2a, 2b, 2c selon l'axe Z est comprise entre 10 mm/s et 250 mm/s, de préférence entre 25 mm/s et 200 mm/s pour une découpe sur les bords afin de permettre une découpe de précision du motif géométrique des bords.

Le dispositif de découpe selon l'invention permet de découper un matelas 1 :
- dans sa largeur ou sa longueur afin d'obtenir un matelas de plus petite dimension,
- dans son épaisseur afin d'obtenir au moins deux matelas d'épaisseur inférieure à celle du matelas de départ, et/ou
- sur ses bords afin de réaliser une feuillure ou toute autre forme de détail de bord.

Pendant la découpe, la vitesse de déplacement du matelas 1 est comprise entre 200 mm/s et 1 m/s, de préférence entre 300 mm/s et 700 mm/s pour la découpe dans l'épaisseur de type refente, et entre 10 mm/s et 250 mm/s, de préférence entre 25 mm/s et 200 mm/s pour la découpe sur les bords afin de permettre une précision du motif géométrique des bords. Le matelas 1 se déplace par mise en mouvement conjointe des convoyeurs 3, 4 et du système de préhension sous vide 5, 6, 7.

Les feuillures ou découpes de bord peuvent avoir toutes formes imaginables, avec des géométries aussi variées que carrées, rectangles, triangles, polygonales, arrondies, curvilignes, sinusoïdales, etc... La figure 5 représente différents types de bords de matelas, panneau ou plaque. Ces exemples de bords sont issus de la norme EN 13964 :2014 (F).

Les mouvements de déplacement du matelas, les mouvements de déplacement de l'élément diamanté, la vitesse de rotation de la poulie supérieure, l'ajustement de la tension et de l'effort de coupe, ainsi que l'actionnement des préhenseurs sous vide sont motorisés et commandés par un système général de commande du dispositif.

Le dispositif de découpe selon l'invention permet de réaliser par exemple des panneaux acoustiques en laine minérale pour plafond. Les feuillures de tels panneaux acoustiques, réalisées sur chacun de ses bords, sont destinées à reposer sur une ossature métallique fixée au plafond. De tels panneaux sont généralement de forme carrée, mais peuvent aussi être rectangulaires. Lorsque le matelas est découpé en deux dans l'épaisseur à partir d'un matelas revêtu d'un voile sur ses deux faces principales, le panneau résultant a un voile sur une seule de ses faces principales. Un voile peut alors être collé sur l'autre face principale du panneau issue de la découpe.

Le dispositif de découpe selon l'invention permet par exemple de découper un matelas ou panneau en laine minérale à la fois dans son épaisseur, transversalement dans sa largeur, et sur ses bords pour réaliser des feuillures ou tout autre détail de bord, comme montré sur la figure 3 par exemple.

La figure 4 représente une vue en coupe d'un exemple de découpe dans un matelas, réalisée avec le dispositif selon l'invention, de préférence avec le fil ou le câble sans fin diamanté 2a, 2b, suivant un chemin défini par la succession de tronçons repérés par les lettres capitales.

Ainsi, le matelas peut être découpé sur un de ses bords pour réaliser une feuillure (repère T), puis en deux dans son épaisseur (repère A), puis transversalement dans sa largeur avec simultanément découpe de feuillures (repères B, C, D, E), puis à nouveau découpe en deux dans l'épaisseur (repère F), et ainsi de suite de façon à former plusieurs matelas ou panneaux avec des feuillures découpées sur deux bords opposés. Chaque matelas ou panneau obtenu est alors tourné de 90° pour réaliser une découpe transversale dans le sens de la longueur initiale avec simultanément découpe des feuillures sur les deux bords restants. La rotation de 90° peut être effectuée au moyen d'un système de préhenseurs sous vide analogue aux préhenseurs 5, 6, disposés en vis-à-vis des préhenseurs 5, 6. En variante, les matelas découpés peuvent être convoyés vers une autre station de découpe équipée d'un autre élément sans fin diamanté agencé pour réaliser la découpe de feuillure sur les bords restants.

Il est aussi possible de réaliser d'abord la découpe du matelas à la bonne taille puis de réaliser la découpe des feuillures.

Il est également possible de réaliser d'abord la découpe du matelas 1 dans son épaisseur au moyen de la bande sans fin diamantée 2c puis de réaliser les découpes de bords au moyen du fil ou du câble sans fin diamanté 2a, 2b.

On obtient alors un ou plusieurs matelas, par exemple carrés ou rectangulaires, avec des feuillures sur chacun de leurs bords et, de façon optionnelle, un voile sur une de leurs faces principales (si le matelas initial est coupé en deux dans l'épaisseur et qu'il comportait un voile sur chacune de ses faces principales). Chaque matelas de ce type peut être ultérieurement muni d'un voile décor sur son autre face principale.

L'invention concerne également un procédé de découpe mettant en oeuvre le dispositif de découpe selon l'invention.

Ainsi, le procédé de découpe de matelas comprend les étapes suivantes :
- fourniture d'un matelas 1,
- déplacement du matelas 1 minérale dans une direction X par des moyens de déplacement 3, 4 du matelas 1, qui comprennent au moins un convoyeur,
- découpe du matelas par un élément sans fin diamanté 2a, 2b, 2c apte à défiler selon une direction Y perpendiculaire à la direction X de déplacement du matelas 1.

Pendant la découpe, le matelas 1 se déplace grâce au convoyeur 3, 4. Il est tenu grâce au système de préhension sous vide 5, 6, 7. L'élément sans fin diamanté 2a, 2b, 2c peut être apte à se déplacer dans une direction Z perpendiculaire à la fois à la direction X de déplacement du matelas 1 et à la direction Y de défilement de l'élément sans fin diamanté 2a, 2b, 2c.

Le matelas découpé par le dispositif de découpe selon l'invention, selon le procédé selon l'invention, comprend, sur au moins une de ses faces principales ou un de ses bords, une découpe d'excellente qualité, lisse à quelques dixièmes de millimètres près. On entend par là que la surface issue de la découpe présente un écart entre le point le plus en saillie de cette surface et le point le plus en retrait de cette surface, d'au plus quelques dixièmes de millimètres, notamment 2 dixièmes de millimètre.

Le procédé selon l'invention garantit également l'atteinte d'une grande précision dimensionnelle pour le panneau dont deux bords opposés parallèles entre eux ne présentent pas d'écart de parallélisme supérieur à 2 dixièmes de millimètre.

## Revendications

1. Dispositif de découpe d'un matelas ou panneau (1) en laine minérale ou d'une plaque ou d'un panneau (1) en matériau de construction poreux, comprenant :
- des moyens de déplacement (3, 4) du matelas ou panneau (1) en laine minérale ou de la plaque ou du panneau (1) en matériau de construction poreux, qui comprennent au moins un convoyeur, aptes à se déplacer suivant une direction (X),
- un élément (2a, 2b, 2c), formant une boucle sans fin munie de grains abrasifs, adapté à découper le matelas ou panneau (1) en laine minérale ou la plaque ou le panneau (1) en matériau de construction poreux,
- des moyens de défilement (8, 9) de l'élément formant une boucle sans fin munie de grains abrasifs (2a, 2b, 2c) dans une direction (Y) perpendiculaire à la direction (X) de déplacement du matelas ou panneau (1) en laine minérale de la plaque ou du panneau (1) en matériau de construction poreux, l'élément (2a, 2b, 2c) formant une boucle sans fin munie de grains abrasifs étant de préférence un fil (2a) formant une boucle sans fin munie de grains abrasifs, un câble (2b) formant une boucle sans fin munie de grains abrasifs ou une bande (2c) formant une boucle sans fin munie de grains abrasifs,
le dispositif de découpe étant **caractérisé en ce qu'**il comprend en outre des moyens de préhension (5, 6, 7) du matelas ou panneau (1) en laine minérale ou de la plaque ou du panneau (1) en matériau de construction poreux, les moyens de préhensions comprenant un système de préhension sous vide adapté à se déplacer simultanément et dans la même direction (X) que les moyens de déplacement (3, 4) du matelas ou panneau (1) en laine minérale ou de la plaque ou du panneau (1) en matériau de construction poreux.

2. Dispositif de découpe selon la revendication 1, dans lequel :
- le fil (2a) formant une boucle sans fin munie de grains abrasifs est un fil en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm, ou
- le câble (2b) formant une boucle sans fin munie de grains abrasifs est un câble multibrin torsadé en acier de diamètre compris entre 0,80 et 1,30 mm, de préférence entre 0,95 et 1,15 mm, à la surface duquel sont soudés des grains abrasifs, notamment de diamant ou de nitrure de bore cubique, de diamètre moyen compris entre 160 et 200 µm, de préférence entre 170 et 190 µm, ou
- la bande (2c) formant une boucle sans fin munie de grains abrasifs est une bande en acier de largeur comprise entre 34 et 42 mm, de préférence entre 36 et 40 mm, et d'épaisseur comprise entre 0,4 et 0,8 mm, de préférence entre 0,5 et 0,7 mm, comprenant des grains abrasifs, notamment de diamant ou de nitrure de bore cubique, de diamètre moyen compris entre 160 et 200 µm, de préférence entre 170 et 190 µm, soudés sur un bord (20) de la bande de largeur comprise entre 2 et 5 mm.

3. Dispositif de découpe selon la revendication 1 ou 2, dans lequel l'élément (2a, 2b, 2c) formant une boucle sans fin munie de grains abrasifs est mis en tension autour de deux poulies (8, 9), l'espace entre les deux poulies (8, 9) étant supérieur à au moins une dimension du matelas ou panneau (1) en laine minérale ou du panneau ou de la plaque (1) en matériau de construction poreux à découper, une des poulies étant libre en rotation tandis que l'autre est apte à être entraînée en rotation par un moteur, et chaque poulie (8, 9) comportant de préférence sur son pourtour un revêtement (90) sur lequel repose l'élément (2a, 2b, 2c) formant une boucle sans fin munie de grains abrasifs.

4. Dispositif de découpe selon l'une des revendications 1 à 3, dans lequel la vitesse linéaire de défilement de l'élément (2a, 2b, 2c) formant une boucle sans fin munie de grains abrasifs est comprise entre 10 m/s et 30 m/s, de préférence entre 10 et 20 m/s, voire entre 10 et 15 m/s.

5. Dispositif de découpe selon l'une des revendications 1 à 4, dans lequel la tension du fil (2a) formant une boucle sans fin munie de grains abrasifs ou du câble (2b) formant une boucle sans fin munie de grains abrasifs est comprise entre 150 N et 500 N, de préférence entre 200 et 300 N ou la tension de la bande (2c) formant une boucle sans fin munie de grains abrasifs est comprise entre 1500 N et 5000 N, de préférence entre 2000 et 4500 N, voire entre 2000 et 3000 N.

6. Dispositif de découpe selon l'une des revendications 1 à 5, comprenant en outre des moyens de déplacement de l'élément (2a, 2b, 2c) formant une boucle sans fin munie de grains abrasifs, l'élément (2a, 2b, 2c) formant une boucle sans fin munie de grains abrasifs étant apte à se déplacer dans une direction (Z) perpendiculaire à la fois à la direction (X) de déplacement du matelas ou panneau (1) en laine minérale ou de la plaque ou du panneau (1) en matériau de construction poreux et à la direction (Y) de défilement de l'élément (2a, 2b, 2c) formant une boucle sans fin munie de grains abrasifs, la vitesse de déplacement de l'élément (2a, 2b, 2c) formant une boucle sans fin munie de grains abrasifs étant de préférence comprise entre 10 mm/s et 250 mm/s, encore plus préférentiellement entre 25 mm/s et 200 mm/s pour une découpe sur les bords.

7. Dispositif de découpe selon l'une des revendications 1 à 6, dans lequel la vitesse de déplacement du matelas ou panneau (1) en laine minérale ou de la plaque ou du panneau (1) en matériau de construction poreux est comprise entre 200 mm/s et 1000 mm/s, de préférence entre 300 mm/s et 700 mm/s pour une découpe dans l'épaisseur et entre 10 mm/s et 250 mm/s, de préférence entre 25 mm/s et 200 mm/s pour une découpe sur les bords.

8. Dispositif de découpe selon l'une des revendications 1 à 7, comprenant en outre au moins un capteur d'effort disposé contre l'élément (2a, 2b, 2c) formant une boucle sans fin munie de grains abrasifs, ainsi qu'un moyen d'ajustement en temps réel de l'effort de coupe afin de le maintenir entre 10 et 30N.

9. Dispositif de découpe selon l'une des revendications 1 à 8, dans lequel les grains abrasifs de l'élément (2a, 2b, 2c) formant une boucle sans fin munie de grains abrasifs sont en diamant ou en nitrure de bore cubique.

10. Procédé de découpe d'un matelas ou panneau (1) en laine minérale ou d'une plaque ou d'un panneau (1) en matériau de construction poreux, comprenant les étapes suivantes :
- fourniture d'un matelas ou panneau (1) en laine minérale ou d'une plaque ou d'un panneau (1) en matériau de construction poreux,
- déplacement du matelas ou panneau (1) en laine minérale ou d'une plaque ou d'un panneau (1) en matériau de construction poreux dans une direction (X) par des moyens de déplacement (3, 4) du matelas ou panneau (1) en laine minérale ou de la plaque ou du panneau (1) en matériau de construction poreux, qui comprennent au moins un convoyeur,
- découpe du matelas ou panneau (1) en laine minérale ou de la plaque ou du panneau (1) en matériau de construction poreux par un élément (2a, 2b, 2c) formant une boucle sans fin munie de grains abrasifs apte à défiler selon une direction (Y) perpendiculaire à la direction (X) de déplacement du matelas ou panneau (1) en laine minérale ou de la plaque ou du panneau (1) en matériau de construction poreux, l'élément (2a, 2b, 2c) formant une boucle sans fin munie de grains abrasifs étant de préférence un fil (2a) formant une boucle sans fin munie de grains abrasifs, un câble (2b) formant une boucle sans fin munie de grains abrasifs ou une bande (2c) formant une boucle sans fin munie de grains abrasifs, ledit procédé étant **caractérisé en ce qu'**il comprend en outre une étape de préhension du matelas ou panneau (1) en laine minérale ou du panneau ou de la plaque (1) en matériau de construction poreux, les moyens de préhensions comprenant un système de préhension sous vide adapté à se déplacer simultanément et dans la même direction (X) que les moyens de déplacement (3, 4) du matelas ou panneau (1) en laine minérale ou du panneau ou de la plaque (1) en matériau de construction poreux.

11. Procédé de découpe selon la revendication 10, dans lequel la découpe est réalisée par :
- un fil (2a) formant une boucle sans fin munie de grains abrasifs constitué d'un fil en acier de diamètre compris entre 0,80 et 1,30 mm, de préférence entre 0,95 et 1,15 mm, à la surface duquel sont soudés des grains abrasifs, notamment d'oxyde de zirconium, de diamètre moyen compris entre 160 et 200 µm, de préférence entre 170 et 190 µm, ou
- un câble (2b) formant une boucle sans fin munie de grains abrasifs constitué d'un câble multibrin torsadé en acier de diamètre compris entre 0,80 et 1,30 mm, de préférence entre 0,95 et 1,15 mm, à la surface duquel sont soudés des grains abrasifs, notamment d'oxyde de zirconium, de diamètre moyen compris entre 160 et 200 µm, de préférence entre 170 et 190 µm, ou
- une bande (2c) formant une boucle sans fin munie de grains abrasifs constituée d'une bande en acier de largeur comprise entre 34 et 42 mm, de préférence entre 36 et 40 mm, et d'épaisseur comprise entre 0,4 et 0,8 mm, de préférence entre 0,5 et 0,7 mm, comprenant des grains abrasifs, notamment d'oxyde de zirconium, de diamètre moyen compris entre 160 et 200 µm, de préférence entre 170 et 190 µm, soudés sur un bord de la bande, de largeur comprise entre 2 et 5 mm.

12. Procédé de découpe selon la revendication 10 ou 11, dans lequel l'élément (2a, 2b, 2c) formant une boucle sans fin munie de grains abrasifs, mis en tension autour de deux poulies (8, 9), est entraîné en défilement par la rotation d'une des poulies elle-même entraînée en rotation par un moteur, l'autre poulie étant libre en rotation, l'espace entre les deux poulies (8, 9) étant supérieur à au moins une dimension du matelas ou panneau (1) en laine minérale ou de la plaque ou du panneau (1) en matériau de construction poreux à découper, et chaque poulie (8, 9) comportant de préférence sur son pourtour un revêtement (90) sur lequel repose l'élément (2a, 2b, 2c) formant une boucle sans fin munie de grains abrasifs.

13. Procédé de découpe selon l'une des revendications 10 à 12, dans lequel l'élément (2a, 2b, 2c) formant une boucle sans fin munie de grains abrasifs défile à une vitesse linéaire comprise entre 10 m/s et 30 m/s, de préférence entre 10 et 20 m/s, voire entre 10 et 15 m/s.

14. Procédé de découpe selon l'une des revendications 10 à 13, dans lequel la tension du fil (2a) formant une boucle sans fin munie de grains abrasifs ou du câble (2b) formant une boucle sans fin munie de grains abrasifs est comprise entre 150 N et 500 N, de préférence entre 200 et 300 N ou la tension de la bande (2c) formant une boucle sans fin munie de grains abrasifs est comprise entre 1500 N et 5000 N, de préférence entre 2000 et 4500 N, voire entre 2000 et 3000 N.

15. Procédé de découpe selon l'une des revendications 10 à 14, dans lequel le matelas ou panneau (1) en laine minérale ou la plaque ou le panneau (1) en matériau de construction poreux se déplace à une vitesse comprise entre 200 mm/s et 1000 mm/s, de préférence entre 300 mm/s et 700 mm/s pour une découpe dans l'épaisseur et entre 10 mm/s et 250 mm/s, de préférence entre 25 mm/s et 200 mm/s pour une découpe sur les bords.

16. Procédé de découpe selon l'une des revendications 10 à 15, dans lequel, pendant l'étape de découpe du matelas ou de la plaque, l'élément (2a, 2b, 2c) formant une boucle sans fin munie de grains abrasifs est apte à se déplacer selon une direction (Z) perpendiculaire à la fois à la direction (X) de déplacement du matelas ou panneau (1) en laine minérale ou de la plaque ou du panneau (1) en matériau de construction poreux, et à la direction (Y) de défilement de l'élément (2a, 2b, 2c) formant une boucle sans fin munie de grains abrasifs, de façon à réaliser une découpe selon deux directions perpendiculaires l'une à l'autre, l'élément (2a, 2b, 2c) formant une boucle sans fin munie de grains abrasifs se déplaçant de préférence à une vitesse comprise entre 10 mm/s et 250 mm/s, encore plus préférentiellement entre 25 mm/s et 200 mm/s pour une découpe sur les bords.

17. Procédé de découpe selon l'une des revendications 10 à 16, dans lequel l'effort de coupe, mesuré par au moins un capteur d'effort disposé contre l'élément (2a, 2b, 2c) formant une boucle sans fin munie de grains abrasifs, est maintenu entre 10 et 30N par un moyen d'ajustement en temps réel.

18. Procédé de découpe selon l'une des revendications 10 à 17, dans lequel les grains abrasifs de l'élément (2a, 2b, 2c) formant une boucle sans fin munie de grains abrasifs sont en diamant ou en nitrure de bore cubique.

## Patentansprüche

1. Vorrichtung zum Schneiden von einer Matratze oder Platte (1) aus Mineralwolle oder einer aus porösem Baumaterial bestehenden Tafel oder Platte (1), umfassend:
- Bewegungsmittel (3, 4) der Matratze oder der Platte (1) aus Mineralwolle oder der aus porösem Baumaterial bestehenden Tafel oder Platte (1), die mindestens einen Förderer umfassen, der dazu ausgelegt ist, sich entlang einer Richtung (X) zu bewegen,
- ein Element (2a, 2b, 2c), das eine mit Schleifkörnern versehene Endlosschlinge bildet, die dazu ausgelegt ist, die Matratze oder Platte (1) aus Mineralwolle oder die aus porösem Baumaterial bestehende Tafel oder Platte (1) zu schneiden,
- Abrollmittel (8, 9) des Elements, das eine mit Schleifkörnern (2a, 2b, 2c) versehene Endlosschlinge bildet in einer Richtung (Y), die senkrecht zu der Bewegungsrichtung (X) der Matratze oder Platte (1) aus Mineralwolle oder der aus porösem Baumaterial bestehenden Tafel oder Platte (1) ist, wobei das Element (2a, 2b, 2c), das eine mit Schleifkörnern versehene Endlosschlinge bildet, vorzugsweise ein Draht (2a), das eine mit Schleifkörnern versehene Endlosschlinge bildet, ein Kabel (2b), das eine mit Schleifkörnern versehene Endlosschlinge bildet, oder ein Band (2c) ist, das eine mit Schleifkörnern versehene Endlosschlinge bildet,
wobei die Schneidvorrichtung **dadurch gekennzeichnet ist, dass** sie ferner Greifmittel (5, 6, 7) der Matratze oder Platte (1) aus Mineralwolle oder der aus porösem Baumaterial bestehenden Tafel oder Platte (1) umfasst, wobei die Greifmittel ein Vakuumgreifersystem umfassen, das dazu ausgelegt ist, sich gleichzeitig und in derselben Richtung (X) wie die Bewegungsmittel (3, 4) der Matratze oder Platte (1) aus Mineralwolle oder der aus porösem Baumaterial bestehenden Tafel oder Platte (1) zu bewegen.

2. Schneidvorrichtung nach Anspruch 1, wobei:
- der Draht (2a), der eine mit Schleifkörnern versehene Endlosschlinge bildet, ein Stahldraht mit einem Durchmesser zwischen 0,80 und 1,30 mm, vorzugsweise zwischen 0,95 bis 1,15 mm ist, wobei dessen Oberfläche mit Schleifkörnern, insbesondere aus Diamanten oder kubischen Bornitrid, mit einem mittleren Durchmesser zwischen 160 und 200 µm, vorzugsweise zwischen 170 und 190 µm, verschweißt ist, oder
- das Kabel (2b), das eine mit Schleifkörnern versehene Endlosschlinge bildet, ein verdrilltes Stahlkabel mit einem Durchmesser zwischen 0,80 und 1,30 mm, vorzugsweise zwischen 0,95 bis 1,15 mm ist, wobei dessen Oberfläche mit Schleifkörnern, insbesondere aus Diamanten oder kubischen Bornitrid, mit einem mittleren Durchmesser zwischen 160 bis 200 µm, vorzugsweise zwischen 170 und 190 µm, verschweißt ist, oder
- das Band (2c), das eine mit Schleifkörnern versehene Endlosschlinge bildet, ein Stahlband mit einer Breite zwischen 34 und 42 mm, vorzugsweise zwischen 36 und 40 mm, und eine Dicke zwischen 0,4 und 0,8 mm, vorzugsweise zwischen 0,5 und 0,7 mm ist, umfassend Schleifkörner, insbesondere aus Diamanten oder kubisches Bornitrid, mit einem mittleren Durchmesser zwischen 160 und 200 µm, vorzugsweise zwischen 170 und 190 µm, die an einem Rand (20) des Bandes mit einer Breite zwischen 2 und 5 mm verschweißt sind.

3. Schneidvorrichtung nach Anspruch 1 oder 2, wobei das Element (2a, 2b, 2c), das eine mit Schleifkörnern versehene Endlosschlinge bildet, um zwei Rollen (8, 9) gespannt wird, wobei der Spalt zwischen den beiden Rollen (8, 9) größer als mindestens eine Abmessung der zu schneidenden Matratze oder Platte (1) aus Mineralwolle oder der aus porösem Baumaterial bestehenden Tafel oder Platte (1) ist, wobei eine der Rollen frei drehbar ist, während die andere dazu ausgelegt ist, durch einen Motor drehend angetrieben zu werden, und wobei jede Rolle (8, 9) vorzugsweise auf ihrem Umfang eine Beschichtung (90) aufweist, auf der sich das Element (2a, 2b, 2c) befindet, das eine mit Schleifkörnern versehene Endlosschlinge bildet.

4. Schneidvorrichtung nach einem der Ansprüche 1 bis 3, wobei die lineare Geschwindigkeit der Abrollung des Elements (2a, 2b, 2c), der eine mit Schleifkörnern versehene Endlosschlinge bildet, zwischen 10 m/s und 30 m/s, vorzugsweise zwischen 10 und 20 m/s oder zwischen 10 und 15 m/s liegt.

5. Schneidvorrichtung nach einem der Ansprüche 1 bis 4, wobei die Spannung des Drahtes (2a), die eine mit Schleifkörnern versehene Endlosschlinge bildet, oder des Kabels (2b), das eine mit Schleifkörnern versehene Endlosschlinge bildet, zwischen 150 N und 500 N, vorzugsweise zwischen 200 und 300 N beträgt, oder die Spannung des Bandes (2c), das eine mit Schleifkörnern versehene Endlosschlinge bildet, zwischen 1.500 N und 5.000 N, vorzugsweise zwischen 2.000 und 4.500 N oder zwischen 2.000 und 3.000 N beträgt.

6. Schneidvorrichtung nach einem der Ansprüche 1 bis 5, ferner umfassend Bewegungsmittel des Elements (2a, 2b, 2c), das eine mit Schleifkörnern versehene Endlosschlinge bildet, wobei das Element (2a, 2b, 2c), das eine mit Schleifkörnern versehene Endlosschlinge bildet, dazu ausgelegt ist sich in einer Richtung (Z) zu bewegen, die sowohl senkrecht zur Bewegungsrichtung (X) der Matratze oder Platte (1) aus Mineralwolle oder der aus porösem Baumaterial bestehenden Tafel oder Platte (1) als auch zur Abrollrichtung (Y) des Elements (2a, 2b, 2c) ist, das eine mit Schleifkörnern versehene Endlosschlinge bildet, wobei die Bewegungsgeschwindigkeit des Elements (2a, 2b, 2c), das eine mit Schleifkörnern versehene Endlosschlinge bildet, vorzugsweise zwischen 10 mm/s und 250 mm/s beträgt, noch mehr bevorzugt zwischen 25 mm/s und 200 mm/s für einen Schnitt an den Rändern beträgt.

7. Schneidvorrichtung nach einem der Ansprüche 1 bis 6, wobei die Bewegungsgeschwindigkeit der Matratze oder Platte (1) aus Mineralwolle oder der aus porösem Baumaterial bestehenden Tafel oder Platte (1) zwischen 200 mm/s und 1000 mm/s, vorzugsweise zwischen 300 mm/s und 700 mm/s für einen Schnitt in der Dicke beträgt und zwischen 10 mm/s und 250 mm/s, vorzugsweise zwischen 25 mm/s und 200 mm/s für einen Schnitt an den Rändern.

8. Schneidvorrichtung nach einem der Ansprüche 1 bis 7, ferner umfassend mindestens einen Kraftsensor, der gegen das Element (2a, 2b, 2c), das eine mit Schleifkörnern versehene Endlosschlinge bildet, angeordnet ist, und auch ein Einstellmittel in Echtzeit der Schneidkraft, um sie zwischen 10 und 30 N zu halten.

9. Schneidvorrichtung nach einem der Ansprüche 1 bis 8, wobei die Schleifkörner des Elements (2a, 2b, 2c), das eine mit Schleifkörnern versehene Endlosschlinge bildet, aus Diamanten oder kubischem Bornitrid bestehen.

10. Verfahren zum Schneiden von einer Matratze oder Platte (1) aus Mineralwolle oder einer aus porösem Baumaterial bestehenden Tafel oder Platte (1), umfassend die folgenden Schritte:
- Bereitstellen einer Matratze oder Platte (1) aus Mineralwolle oder einer aus porösem Baumaterial bestehenden Tafel oder Platte (1),
- Bewegen der Matratze oder Platte (1) aus Mineralwolle oder einer aus porösem Baumaterial bestehenden Tafel oder Platte (1) in einer Richtung (X) durch Bewegungsmittel (3, 4) der Matratze oder Platte (1) aus Mineralwolle oder der aus porösem Baumaterial bestehenden Tafel oder Platte (1), die mindestens einen Förderer umfassen,
- Schneiden der Matratze oder Platte (1) aus Mineralwolle oder der aus porösem Baumaterial bestehenden Tafel oder Platte (1) durch ein Element (2a, 2b, 2c), das eine mit Schleifkörnern versehene Endlosschlinge bildet, das dazu ausgelegt ist, sich entlang einer Richtung (Y) abzurollen, die senkrecht zur Bewegungsrichtung (X) der Matratze oder Platte (1) aus Mineralwolle oder der aus porösem Baumaterial bestehenden Tafel oder Platte (1) ist, wobei das Element (2a, 2b, 2c), das eine mit Schleifkörnern versehene Endlosschlinge bildet, vorzugsweise ein Draht (2a), der eine mit Schleifkörnern versehene Endlosschlinge bildet, ein Kabel (2b), das eine mit Schleifkörnern versehene Endlosschlinge bildet, oder ein Band (2c) ist, das eine mit Schleifkörnern versehene Endlosschlinge bildet, wobei das Verfahren
**dadurch gekennzeichnet ist, dass** es ferner einen Greifschritt der Matratze oder Platte (1) aus Mineralwolle oder der aus porösem Baumaterial bestehenden Tafel oder Platte (1) umfasst, wobei die Greifmittel ein Vakuumgreifersystem umfassen, das dazu ausgelegt ist, sich gleichzeitig und in derselben Richtung (X) zu bewegen wie die Bewegungsmittel (3, 4) der Matratze oder der Platte (1) aus Mineralwolle oder der aus porösem Baumaterial bestehenden Tafel oder Platte (1).

11. Verfahren zum Schneiden nach Anspruch 10, wobei das Schneiden ausgeführt wird durch:
- einen Draht (2a), der eine mit Schleifkörnern versehene Endlosschlinge bildet, der aus einem Stahldraht mit einem Durchmesser zwischen 0,80 bis 1,30 mm, vorzugsweise zwischen 0,95 und 1,15 mm, gebildet wird, wobei dessen Oberfläche mit Schleifkörnern, insbesondere aus Zirkoniumoxid, mit einem mittleren Durchmesser zwischen 160 und 200 µm, vorzugsweise zwischen 170 bis 190 µm, verschweißt ist, oder
- ein Kabel (2b), das eine mit Schleifkörnern versehene Endlosschlinge bildet, das aus einem verdrillten Stahlkabel mit einem Durchmesser zwischen 0,80 und 1,30 mm, vorzugsweise zwischen 0,95 bis 1,15 mm gebildet wird, wobei dessen Oberfläche mit Schleifkörnern, insbesondere aus Zirkoniumoxid, mit einem mittleren Durchmesser zwischen 160 bis 200 µm, vorzugsweise zwischen 170 und 190 µm, verschweißt ist, oder
- ein Band (2c), das eine mit Schleifkörnern versehene Endlosschlinge bildet, das aus einem Stahlband mit einer Breite zwischen 34 und 42 mm, vorzugsweise zwischen 36 und 40 mm, und einer Dicke zwischen 0,4 und 0,8 mm, vorzugsweise zwischen 0,5 und 0,7 mm gebildet wird, umfassend Schleifkörner, insbesondere aus Zirkoniumoxid, mit einem mittleren Durchmesser zwischen 160 und 200 µm, vorzugsweise zwischen 170 und 190 µm, die an einem Rand des Bandes mit einer Breite zwischen 2 und 5 mm verschweißt sind.

12. Verfahren zum Schneiden nach Anspruch 10 oder 11, wobei das Element (2a, 2b, 2c), das eine mit Schleifkörnern versehene Endlosschlinge bildet, das um zwei Rollen (8, 9) gespannt wird, durch Drehung einer der Rollen abgerollt wird, die selbst durch einen Motor drehen angetrieben wird, wobei die andere Rolle frei drehbar ist, wobei der Spalt zwischen den beiden Rollen (8, 9) größer als mindestens eine Abmessung der zu schneidenden Matratze oder Platte (1) aus Mineralwolle oder der aus porösem Baumaterial bestehenden Tafel oder Platte (1) ist, wobei jede Rolle (8, 9) vorzugsweise auf ihrem Umfang eine Beschichtung (90) aufweist, auf der sich das Element (2a, 2b, 2c) befindet, das eine mit Schleifkörnern versehene Endlosschlinge bildet.

13. Verfahren zum Schneiden nach einem der Ansprüche 10 bis 12, wobei das Element (2a, 2b, 2c), das eine mit Schleifkörnern versehene Endlosschlinge bildet, sich mit einer linearen Geschwindigkeit zwischen 10 m/s und 30 m/s, vorzugsweise zwischen 10 und 20 m/s oder zwischen 10 und 15 m/s abrollt.

14. Verfahren zum Schneiden nach einem der Ansprüche 10 bis 13, wobei die Spannung des Drahtes (2a), die eine mit Schleifkörnern versehene Endlosschlinge bildet, oder des Kabels (2b), das eine mit Schleifkörnern versehene Endlosschlinge bildet, zwischen 150 N und 500 N, vorzugsweise zwischen 200 und 300 N beträgt, oder die Spannung des Bandes (2c), das eine mit Schleifkörnern versehene Endlosschlinge bildet, zwischen 1500 N und 5000 N, vorzugsweise zwischen 2000 und 4500 N oder zwischen 2000 und 3000 N beträgt.

15. Verfahren zum Schneiden nach einem der Ansprüche 10 bis 14, wobei die Matratze oder Platte (1) aus Mineralwolle oder die aus porösem Baumaterial bestehende Tafel oder Platte (1) sich mit einer Geschwindigkeit zwischen 200 mm/s und 1000 mm/s, vorzugsweise zwischen 300 mm/s und 700 mm/s für einen Schnitt in der Dicke und zwischen 10 mm/s und 250 mm/s, vorzugsweise zwischen 25 mm/s und 200 mm/s für einen Schnitt an den Rändern bewegt.

16. Verfahren zum Schneiden nach einem der Ansprüche 10 bis 15, wobei während des Schritts des Schneidens der Matratze oder der Platte das Element (2a, 2b, 2c), das eine mit Schleifkörnern versehene Endlosschlinge bildet, dazu ausgelegt ist, sich entlang einer Richtung (Z) zu bewegen, die sowohl senkrecht zu der Bewegungsrichtung (X) der Matratze oder Platte (1) aus Mineralwolle oder der aus porösem Baumaterial bestehenden Tafel oder Platte (1) als auch der Abrollrichtung (Y) des Elements (2a, 2b, 2c) ist, das eine mit Schleifkörnern versehene Endlosschlinge bildet, sodass ein Schnitt entlang zwei zueinander senkrechten Richtungen ausgeführt wird, wobei das Element (2a, 2b, 2c), das eine mit Schleifkörnern versehene Endlosschlinge bildet, sich vorzugsweise mit einer Geschwindigkeit zwischen 10 mm/s und 250 mm/s und noch mehr bevorzugt zwischen 25 mm/s und 200 mm/s für einen Schnitt an den Rändern bewegt.

17. Verfahren zum Schneiden nach einem der Ansprüche 10 bis 16, wobei die Schneidkraft, die durch mindestens einen Kraftsensor gemessen wird, der gegen das Element (2a, 2b, 2c), das eine mit Schleifkörnern versehene Endlosschlinge bildet, angeordnet ist, durch ein Einstellmittel in Echtzeit zwischen 10 und 30 N gehalten wird.

18. Verfahren zum Schneiden nach einem der Ansprüche 10 bis 17, wobei die Schleifkörner des Elements (2a, 2b, 2c), das eine mit Schleifkörnern versehene Endlosschlinge bildet, aus Diamanten oder kubischem Bornitrid bestehen.

## Claims

1. A device for cutting a mat or panel (1) made of mineral wool or a board or a panel (1) made of porous construction material, comprising:
- means (3, 4) for moving the mat or panel (1) made of mineral wool or the board or the panel (1) made of porous construction material, which comprise at least one conveyor, which are capable of moving along a direction (X),
- an element (2a, 2b, 2c), that forms an endless loop provided with abrasive grains, designed to cut the mat or panel (1) made of mineral wool or the board or the panel (1) made of porous construction material,
- means (8, 9) for running the element that forms an endless loop provided with abrasive grains (2a, 2b, 2c) in a direction (Y) perpendicular to the direction (X) of movement of the mat or panel (1) made of mineral wool or the board or the panel (1) made of porous construction material, the element (2a, 2b, 2c) that forms an endless loop provided with abrasive grains preferably being a wire (2a) that forms an endless loop provided with abrasive grains, a cable (2b) that forms an endless loop provided with abrasive grains or a strip (2c) that forms an endless loop provided with abrasive grains, the cutting device being **characterized in that** it further comprises means (5, 6, 7) for gripping the mat or panel (1) made of mineral wool or the board or the panel (1) made of porous construction material, the gripping means comprising a vacuum gripping system designed to move at the same time and in the same direction (X) as the means (3, 4) for moving the mat or panel (1) made of mineral wool or the board or the panel (1) made of porous construction material.

2. The cutting device as claimed in claim 1, wherein:
- the wire (2a) that forms an endless loop provided with abrasive grains is a steel wire with a diameter of between 0.80 and 1.30 mm, preferably between 0.95 and 1.15 mm, welded to the surface of which are abrasive grains, in particular of diamond or of cubic boron nitride, having a mean diameter of between 160 and 200 µm, preferably between 170 and 190 µm, or
- the cable (2b) that forms an endless loop provided with abrasive grains is a twisted multistrand steel cable with a diameter of between 0.80 and 1.30 mm, preferably between 0.95 and 1.15 mm, welded to the surface of which are abrasive grains, in particular of diamond or of cubic boron nitride, having a mean diameter of between 160 and 200 µm, preferably between 170 and 190 µm, or
- the strip (2c) that forms an endless loop provided with abrasive grains is a steel strip with a width of between 34 and 42 mm, preferably between 36 and 40 mm, and with a thickness of between 0.4 and 0.8 mm, preferably between 0.5 and 0.7 mm, comprising abrasive grains, in particular of diamond or cubic boron nitride, having a mean diameter of between 160 and 200 µm, preferably between 170 and 190 µm, welded to an edge (20) of the strip having a width of between 2 and 5 mm.

3. The cutting device as claimed in claim 1 or 2, wherein the element (2a, 2b, 2c) that forms an endless loop provided with abrasive grains is placed under tension around two pulleys (8, 9), the space between the two pulleys (8, 9) being greater than at least one dimension of the mat or panel (1) made of mineral wool or the board or the panel (1) made of porous construction material to be cut, one of the pulleys being freely rotatable while the other is capable of being rotated by a motor, and each pulley (8, 9) preferably comprising on its perimeter a coating (90), on which the element (2a, 2b, 2c) that forms an endless loop provided with abrasive grains rests.

4. The cutting device as claimed in one of claims 1 to 3, wherein the linear run speed of the element (2a, 2b, 2c) that forms an endless loop provided with abrasive grains is between 10 m/s and 30 m/s, preferably between 10 and 20 m/s, or even between 10 and 15 m/s.

5. The cutting device as claimed in one of claims 1 to 4, wherein the tension of the wire (2a) that forms an endless loop provided with abrasive grains or of the cable (2b) that forms an endless loop provided with abrasive grains is between 150 N and 500 N, preferably between 200 and 300 N or the tension of the strip (2c) that forms an endless loop provided with abrasive grains is between 1500 N and 5000 N, preferably between 2000 and 4500 N, or even between 2000 and 3000 N.

6. The cutting device as claimed in one of claims 1 to 5, further comprising means for moving the element (2a, 2b, 2c) that forms an endless loop provided with abrasive grains, the element (2a, 2b, 2c) that forms an endless loop provided with abrasive grains being capable of moving in a direction (Z) perpendicular both to the direction (X) of movement of the mat or panel (1) made of mineral wool or the board or the panel (1) made of porous construction material and to the run direction (Y) of the element (2a, 2b, 2c) that forms an endless loop provided with abrasive grains, the speed of movement of the element (2a, 2b, 2c) that forms an endless loop provided with abrasive grains preferably being between 10 mm/s and 250 mm/s, more preferentially still between 25 mm/s and 200 mm/s for cutting on the edges.

7. The cutting device as claimed in one of claims 1 to 6, wherein the speed of movement of the mat or panel (1) made of mineral wool or the board or the panel (1) made of porous construction material is between 200 mm/s and 1000 mm/s, preferably between 300 mm/s and 700 mm/s for cutting in the thickness and between 10 mm/s and 250 mm/s, preferably between 25 mm/s and 200 mm/s for cutting on the edges.

8. The cutting device as claimed in one of claims 1 to 7, further comprising at least one force sensor placed against the element (2a, 2b, 2c) that forms an endless loop provided with abrasive grains, and also a means for adjusting, in real time, the cutting force in order to maintain it between 10 and 30 N.

9. The cutting device as claimed in one of claims 1 to 8, wherein the abrasive grains of the element (2a, 2b, 2c) that forms an endless loop provided with abrasive grains are made of diamond or of cubic boron nitride

10. A method for cutting a mat or panel (1) made of mineral wool or a board or a panel (1) made of porous construction material, comprising the following steps:
- providing a mat or panel (1) made of mineral wool or a board or a panel (1) made of porous construction material,
- moving the mat or panel (1) made of mineral wool or a board or a panel (1) made of porous construction material in a direction (X) by means (3, 4) for moving the mat or panel (1) made of mineral wool or the board or the panel (1) made of porous construction material, which comprise at least one conveyor,
- cutting the mat or panel (1) made of mineral wool or the board or the panel (1) made of porous construction material with an element (2a, 2b, 2c) that forms an endless loop provided with abrasive grains capable of running in a direction (Y) perpendicular to the direction (X) of movement of the mat or panel (1) made of mineral wool or the board or the panel (1) made of porous construction material, the element (2a, 2b, 2c) that forms an endless loop provided with abrasive grains preferably being a wire (2a) that forms an endless loop provided with abrasive grains, a cable (2b) that forms an endless loop provided with abrasive grains or a strip (2c) that forms an endless loop provided with abrasive grains, the method being **characterized in that** it further comprises a step of gripping the mat or panel (1) made of mineral wool or the board or the panel (1) made of porous construction material, the gripping means comprising a vacuum gripping system designed to move at the same time and in the same direction (X) as the means (3, 4) for moving the mat or panel (1) made of mineral wool or the board or the panel (1) made of porous construction material.

11. The cutting method as claimed in claim 10, wherein the cutting is carried out by:
- a wire (2a) that forms an endless loop provided with abrasive grains consisting of a steel wire with a diameter of between 0.80 and 1.30 mm, preferably between 0.95 and 1.15 mm, welded to the surface of which are abrasive grains, in particular of zirconium oxide, having a mean diameter of between 160 and 200 µm, preferably between 170 and 190 µm, or
- a cable (2b) that forms an endless loop provided with abrasive grains consisting of a twisted multistrand steel cable with a diameter of between 0.80 and 1.30 mm, preferably between 0.95 and 1.15 mm, welded to the surface of which are abrasive grains, in particular of zirconium oxide, having a mean diameter of between 160 and 200 µm, preferably between 170 and 190 µm, or
- a strip (2c) that forms an endless loop provided with abrasive grains consisting of a steel strip with a width of between 34 and 42 mm, preferably between 36 and 40 mm, and with a thickness of between 0.4 and 0.8 mm, preferably between 0.5 and 0.7 mm, comprising abrasive grains, in particular of zirconium oxide, having a mean diameter of between 160 and 200 µm, preferably between 170 and 190 µm, welded to an edge of the strip having a width of between 2 and 5 mm.

12. The cutting method as claimed in claim 10 or 11, wherein the element (2a, 2b, 2c) that forms an endless loop provided with abrasive grains, placed under tension around two pulleys (8, 9), is moved by the rotation of one of the pulleys, which is itself rotated by a motor, the other pulley being freely rotatable, the space between the two pulleys (8, 9) being greater than at least one dimension of the mat or panel (1) made of mineral wool or the board or the panel (1) made of porous construction material to be cut, and each pulley (8, 9) preferably comprising on its perimeter a coating (90) on which the element (2a, 2b, 2c) that forms an endless loop provided with abrasive grains rests.

13. The cutting method as claimed in one of claims 10 to 12, wherein the element (2a, 2b, 2c) that forms an endless loop provided with abrasive grains moves at a linear speed of between 10 m/s and 30 m/s, preferably between 10 and 20 m/s, or even between 10 and 15 m/s.

14. The cutting method as claimed in one of claims 10 to 13, wherein the tension of the wire (2a) that forms an endless loop provided with abrasive grains or of the cable (2b) that forms an endless loop provided with abrasive grains is between 150 N and 500 N, preferably between 200 and 300 N or the tension of the strip (2c) that forms an endless loop provided with abrasive grains is between 1500 N and 5000 N, preferably between 2000 and 4500 N, or even between 2000 and 3000 N.

15. The cutting method as claimed in one of claims 10 to 14, wherein the mat or panel (1) made of mineral wool or the board or the panel (1) made of porous construction material moves at a speed of between 200 mm/s and 1000 mm/s, preferably between 300 mm/s and 700 mm/s for cutting in the thickness and between 10 mm/s and 250 mm/s, preferably between 25 mm/s and 200 mm/s for cutting on the edges.

16. The cutting method as claimed in one of claims 10 to 15, wherein, during the step of cutting the mat or the board, the element (2a, 2b, 2c) that forms an endless loop provided with abrasive grains is capable of moving in a direction (Z) perpendicular both to the direction (X) of movement of the mat or panel (1) made of mineral wool or the board or the panel (1) made of porous construction material and to the run direction (Y) of the element (2a, 2b, 2c) that forms an endless loop provided with abrasive grains, so as to carry out cutting along two directions that are perpendicular to one another, the element (2a, 2b, 2c) that forms an endless loop provided with abrasive grains preferably moving at a speed of between 10 mm/s and 250 mm/s, more preferentially still between 25 mm/s and 200 mm/s for cutting on the edges.

17. The cutting method as claimed in one of claims 10 to 16, wherein the cutting force, measured by at least one force sensor placed against the element (2a, 2b, 2c) that forms an endless loop provided with abrasive grains, is maintained between 10 and 30N by a real-time adjustment means.

18. The cutting method as claimed in one of claims 10 to 17, wherein the abrasive grains of the element (2a, 2b, 2c) that forms an endless loop provided with abrasive grains are made of diamond or of cubic boron nitride.
